# DEMANDE DE BREVET EUROPEEN

(11) **EP 4 674 243 A1**
(43) Date de publication de la demande: **07.01.2026**
(21) Numéro de dépôt: 25186473.2
(22) Date de dépôt: 30.06.2025
(51) Int. Cl.: A01B 51/02, A01B 69/04, A01D 46/28, A01D 46/30, A01D 69/06, B60K 1/02, B60K 1/04, B60K 7/00, B60K 17/04, B60K 17/356, B60L 50/60, B60L 53/80

(54) **PLATEFORME ROBOTIQUE À CENTRE DE GRAVITÉ BAS, NOTAMMENT DESTINÉE À SE DÉPLACER ENTRE DEUX RANGS DE VIGNES**

(30) Priorité: 02.07.2024 FR 2407174
(71) Demandeur: Exel Industries, 51200 Epernay (FR)
(72) Inventeur: BACLE, Thibault, 69003 LYON (FR); GAUTIER, Jocelyn, 69009 LYON (FR); VIDAL, Vincent, 66750 SAINT CYPRIEN (FR)
(74) Mandataire: Bandpay & Greuter

(57) **Abrégé**

L'invention vise une plateforme robotique (1) mobile destinée à se déplacer entre deux rangs de végétations, notamment de vignes, comportant quatre roues (2), un châssis (3) creux délimitant une chambre (30), un plateau, configuré pour fermer la chambre (30), un système de propulsion (100) logé dans la chambre (30) et configuré pour permettre l'entraînement des roues (2), ledit système comportant deux moto-réducteurs de traction (101), chacun relié à une paire de roues (2), chaque paire étant placée d'un bord opposé du châssis (3) et en regard l'une de l'autre, au moins une batterie (102)disposée dans le châssis, deux systèmes de chaîne (103), chacun reliant deux roues (2) d'une même paire, placées sur un même bord du châssis (3), et chacun étant configuré pour synchroniser la rotation des roues de déplacement (2) d'un même bord.

## Description

### DOMAINE TECHNIQUE

La présente invention concerne le domaine des engins agricoles et, en particulier, le domaine des engins agricoles autonomes.

Plus précisément, l'invention a trait à une plateforme robotique mobile destinée à se déplacer entre deux rangs de végétation, notamment de vignes, en particulier entre deux rangs étroits.

### ETAT DE LA TECHNIQUE

Dans le domaine viticole, les rangs de vignes présentent un écartement restreint, c'est-à-dire que deux rangs de vignes sont espacés notamment de 0,9 m à 1,30 m et, dans certains cas, d'environ 1 m, ce qui laisse un couloir de circulation d'environ 60 cm de large entre deux rangs. Il est connu de récolter les fruits de vignes au moyen d'un système enjambeur secouant les pieds de vignes permettant de faire tomber les fruits de la vigne puis les transférer vers un conteneur de stockage, au moyen d'un système de transfert. Le conteneur de stockage circule, de manière parallèle au système enjambeur, dans un rang de vignes juxtaposé ou dans des rangs de vignes juxtaposés et le système de transfert s'étend entre le système enjambeur et le conteneur de stockage au-dessus des vignes. L'entretien des vignes, de façon générale, est réalisée aujourd'hui au moyen d'enjambeurs équipés d'outils adaptés.

Toutefois, de tels systèmes enjambeur, couplés aux conteneurs de stockage sont encombrants et pas adapté aux vignes étroites. Par ailleurs, ces systèmes ne permettent pas le ramassage des raisins par grappes entières, ce qui est notamment obligatoire selon le cahier des charges champenois pour obtenir l'appellation Champagne.

Ainsi, il est connu de procéder au ramassage manuel des grappes de raisins dans les vignes étroites ce qui présente une contrainte en termes de temps, le ramassage étant chronophage et pénible pour la personne qui doit se baisser, couper la grappe de raisins, se relever et la mettre dans un conteneur, soit qu'il porte sur son dos, soit qui est à proximité dans le rang.

De plus, il existe des robots de ramassage de fruits, présentant un châssis relié à des roues ou à des chenilles pour permettre son déplacement entre les rangs de végétaux. Sur le châssis, il est disposé un bras robotique configuré pour cueillir les fruits. Par ailleurs, le châssis peut être relié à un chariot configuré pour contenir les fruits une fois cueillis. (CN116058175)

Toutefois, ce type de robots de ramassage n'est pas adapté aux vignes étroites, car ils sont trop encombrants et n'est pas non plus adapté à des sols irréguliers présentant par exemple des devers. En effet, le chariot, tout comme le bras robotique, sont configurés pour opérer sur des sols réguliers et relativement droits.

Ainsi, l'invention vise à résoudre les problèmes susmentionnés en proposant une plateforme robotique destinée à se déplacer entre des rangs de vignes étroites, adaptée à des sols irréguliers et en dévers et permettant à la fois le ramassage de grappes entières de raisins et le stockage desdites grappes de raisins, de sorte à faciliter, automatiser et réduire le temps et la contrainte du ramassage des grappes de raisins en vignes étroites.

### PRESENTATION DE L'INVENTION

Plus précisément, l'invention a pour objet une plateforme robotique mobile destinée à se déplacer sur le sol entre deux rangs de végétations, notamment de vignes, et s'étendant en longueur selon un axe longitudinal, en largeur selon un axe transversal et en hauteur selon un axe vertical. Ladite plateforme comporte quatre roues de déplacement, à savoir deux roues gauche et deux roues droite, un châssis creux délimitant une chambre, relié aux roues de déplacement, les roues gauche étant placées sur un même bord du châssis et les roues droite étant placées sur un même bord du châssis opposé au bord recevant les roues gauches, au moins un plateau, disposé au-dessus de la chambre du châssis, au moins un système de propulsion configuré pour permettre l'entraînement des quatre roues de déplacement, ledit système de propulsion étant disposé dans la chambre du châssis. Ledit système de propulsion comporte au moins deux moto-réducteurs de traction, chacun relié à une paire de roues de déplacement, chaque paire de roues de déplacement étant placée sur un bord opposé du châssis et en regard l'une de l'autre, chaque moto-réducteur de traction comprenant une partie moteur logée intégralement dans la chambre et une partie réducteur saillant, depuis la chambre, au moins en partie à l'extérieur du châssis pour être couplée à une roue de déplacement ; au moins une batterie disposée dans le volume défini par le châssis, sous le plateau ; au moins deux systèmes de chaîne, chaque système de chaîne reliant deux roues de déplacement placées sur un même bord du châssis, chaque système de chaîne étant configuré pour synchroniser la rotation des roues d'un même bord.

La compacité et l'agencement du système de propulsion de la plateforme robotique selon l'invention, comprenant en particulier les moto-réducteurs de traction, ainsi que des contrôleurs de moteurs respectifs, une ou des batteries, ou encore un contrôleur haut niveau, permet avantageusement au plateau disposé au-dessus du châssis d'à peine dépasser verticalement le haut des roues, soit de culminer à, environ, 407 mm du sol.

La plateforme robotique est autonome entre les rangs de vignes et permet par exemple le ramassage et/ou le stockage des fruits, à savoir des grappes de raisins, cueillies sur les vignes. En effet, les roues de déplacement permettent la mobilité de la plateforme robotique entre les vignes, et le châssis, en particulier la chambre du châssis, permet de loger le système de propulsion des roues permettant le déplacement de la plateforme robotique. Le plateau disposé au-dessus de la chambre du châssis permet aussi la fixation sur la plateforme d'un conteneur de stockage des fruits ramassés et/ou d'un bras robotique permettant de cueillir les fruits ou l'entretien des vignes, par exemple. De plus, une telle configuration du système de propulsion permet l'entraînement des quatre roues de déplacement de la plateforme robotique en limitant son encombrement et en abaissant son centre de gravité, permettant ainsi une bonne stabilité de la plateforme robotique, notamment en pente et en dévers. Le centre de gravité bas permet que le plateau se trouve à une hauteur aisément accessible pour un humain de taille normale, qui pourra déposer le cas échéant des grappes de raisins directement dans des conteneurs, tels que des caisses viticoles, déposés sur ledit plateau.

Avantageusement, ledit système de propulsion comporte deux moto-réducteurs de traction, et une ou deux batteries configurées pour alimenter les moto-réducteurs de traction, chacun des moto-réducteurs de traction permettant la mise en mouvement de deux roues de déplacement d'un même bord du châssis. En présence de deux batteries, celles-ci sont en outre disposées en regard l'une de l'autre et disposées dans la chambre.

Les moto-réducteurs de traction comprennent, de manière classique, une partie réducteur et une partie moteur, notamment électrique dans le cas présent, et coopèrent avec des roulements pour être couplés aux roues de déplacement.

Avec la présence des deux moto-réducteurs de traction et de la ou des deux batteries associées, de chaque bord, une roue motrice est entraînée par un moteur et entraîne l'autre roue du même bord par l'intermédiaire d'un système de chaîne.

Selon un mode de réalisation, un moto-réducteur de traction est disposé à l'avant de la chambre et entraîne en rotation une roue avant d'un premier bord, gauche ou droit, la dite roue avant du premier bord étant solidaire d'une couronne elle-même solidaire de son moyeu, et étant reliée à la roue arrière du même premier bord par l'intermédiaire de l'un des systèmes de chaîne, ladite roue arrière du premier bord étant elle-même solidaire de sa propre couronne solidaire de son moyeu, de sorte à entraîner en rotation ladite roue arrière du premier bord ; et un deuxième moto-réducteur de traction est disposé à l'arrière de la chambre et entraîne en rotation une roue arrière d'un second bord, opposé au premier bord, la dite roue arrière du second bord étant solidaire d'une couronne elle-même solidaire de son moyeu, et étant reliée à la roue avant du même second bord par l'intermédiaire de l'autre des systèmes de chaîne, ladite roue avant du second bord étant elle-même solidaire de sa propre couronne solidaire de son moyeu, de sorte à entraîner en rotation ladite roue avant du second bord, de façon similaire. Dans ce cas, le premier moto-réducteur de traction, à l'avant de la chambre, permet la mise en mouvement des roues gauche et le deuxième moto-réducteur de traction, à l'arrière de la chambre, permet la mise en mouvement des roues droites. Bien entendu, un agencement inverse dans lequel le moteur disposé à l'avant entraîne les roues du bord droit et ou le moteur disposé à l'arrière entraîne les roues du bord gauche est parfaitement possible.

Avantageusement, les couronnes sont fixées sur les moto-réducteurs de traction et présentent sensiblement une forme de bol. Ainsi les réducteurs des moto-réducteurs de traction se trouvent être à l'intérieur desdits bols, avec pour avantages la compacité et la disposition de la chaîne des systèmes de chaîne, de chaque côté, autour des réducteurs, permettant ainsi l'application de la tension de la chaîne entre les roulements des moto-réducteurs.

L'asservissement en vitesse de chaque bord, en particulier dans une fourchette de vitesse allant de -7km/h à +7km/h, permet soit la marche avant, chaque bord ayant une vitesse contribuant à avancer, soit la marche arrière, chaque bord ayant une vitesse contribuant à reculer, soit un virage, un différentiel de vitesse entre les bords contribuant à établir une trajectoire courbe pouvant atteindre un giration telle que la plateforme tourne sur elle-même.

Avantageusement, les systèmes de chaîne sont disposés à l'extérieur du châssis par rapport à chaque bord. Il en va de même pour les couronnes.

Avantageusement, l'au moins une batterie est logée dans une baie. De préférence, deux batteries sont présentes, chaque batterie alimentant les moto-réducteurs de traction.

Avantageusement, chaque batterie est logée dans une baie, au fond de laquelle est logé un connecteur. Ainsi les batteries alimentent électriquement avec une tension nominale de, par exemple, environ 48V deux contrôleurs moteurs, dits bas niveau, lesquels asservissent chacun un moto-réducteur de traction. La ou les batteries peuvent également alimenter un convertisseur DC/DC alimentant le reste de l'électronique embarquée à une tension de, environ, 24V.

Avantageusement, la ou les batteries sont notamment rackables et amovibles.

Avantageusement, la plateforme robotique comprend également un contrôleur haut niveau, par exemple de type PC embarqué, logé dans la chambre et configuré pour exécuter un logiciel de navigation de la plateforme robotique et pour commander aux contrôleurs moteurs des moto-réducteurs de traction.

La chambre peut également loger d'autres équipements et capteurs, notamment au moins un capteur GPS permettant une localisation de la plateforme robotique et donc son guidage dans les vignes ; un routeur Ethernet permettant de créer un réseau Ethernet au sein de la plateforme robotique ; un hub USB ; un récepteur de télécommande de la plateforme robotique ; un capteur inertiel pour déterminer l'assiette, le tangage ou encore le lacet de la plateforme robotique.

Avantageusement, la plateforme robotique comporte deux systèmes de galets tendeurs, à savoir un premier galet tendeur et un deuxième galet tendeur, le premier galet tendeur étant interposé entre les deux roues gauches de déplacement et le deuxième galet tendeur étant interposé entre les deux roues droite de déplacement, les systèmes de galet tendeur étant respectivement reliés à un système de chaîne, lesdits systèmes de galet tendeur étant configurés pour assurer la tension desdits systèmes de chaîne.

Avantageusement, la plateforme robotique comporte au moins un porte-fusible, ledit porte fusible étant relié au châssis sur l'un de ses bords longitudinaux.

Avantageusement, la plateforme robotique comporte au moins deux caméras, situées sur le châssis sur un premier bord transversal et sur un deuxième bord transversal dudit châssis.

Les caméras constituent ainsi le système de vision de la plateforme robotique.

Avantageusement, le châssis comporte un capotage extérieur enveloppant ledit système de propulsion et configuré pour protéger ledit système de propulsion. La plateforme robotique peut également comporter un « bumper », autrement dit un parechoc, pour parer à la sécurité en cas de choc avec un obstacle.

Avantageusement, la chambre présente une largeur selon l'axe transversal maximale de 0,40 m, la largeur de la chambre étant notamment égale à environ 0,37 m, une longueur selon l'axe longitudinal maximale d'environ 1,10 m, la longueur de la chambre étant égale à environ 1,02 m, et une hauteur suivant l'axe vertical maximale d'environ 0,35 m, la hauteur de la chambre étant notamment égale à environ 0,32 m.

Une telle largeur du châssis permet l'implantation des roues dans une largeur inférieure à environ 60 cm, permettant d'assurer la circulation de la plateforme robotique dans les vignes étroites.

La garde au sol est pour autant préservée, étant notamment comprise entre 10 cm et 18 cm, notamment environ égale à 14 cm.

Avantageusement, le plateau est amovible sur ledit châssis de sorte à fermer la chambre du châssis, ou, au contraire, laisser libre l'accès à la chambre dudit châssis.

La chambre du châssis permet notamment de loger le système de propulsion des roues d'entrainement permettant le déplacement de la plateforme robotique. Ainsi, le plateau se trouve horizontalement au-dessus de la chambre, permet à fortiori d'empêcher l'accès à la chambre.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
la figure 1 est une représentation schématique en perspective de la plateforme robotique objet de l'invention, rendant visible le châssis sur lequel est disposé le plateau et assujettis les deux mâts, diagonalement opposés ;
la figure 2 est une vue de côté de la plateforme robotique de la figure 1 ;
la figure 3 est une vue semblable à celle de la figure 1, sur laquelle un volume utile, par exemple un conteneur, a été ajouté sur l'une des régions de réception du plateau de la plateforme robotique ;
la figure 4 est une vue semblable à celle de la figure 3, sur laquelle un deuxième conteneur a été ajouté sur l'autre région de réception du plateau de la plateforme robotique ;
la figure 5 est une vue de dessus de la plateforme robotique de la figure 1 ;
la figure 6 est une vue de dessous de la plateforme robotique de la figure 1, à laquelle a été omis un plateau de fond de la plateforme robotique, de sorte à rendre visible le système de propulsion de la plateforme robotique ;
la figure 7 est une représentation en perspective de la plateforme robotique de la figure 1 à laquelle a été gardé uniquement le châssis, les roues de déplacement, et le système de propulsion ;
la figure 8 est une représentation en perspective du châssis de la plateforme robotique de la figure 1 ;
la figure 9 est une vue en perspective de la plateforme robotique de la figure 1, à laquelle a été enlevé le plateau, de sorte à rendre visible la chambre du châssis logeant le système de propulsion ;
la figure 10 est une vue en perspective du châssis relié au système de propulsion et aux roues de déplacement de la plateforme robotique de la figure 1 ;
la figure 11 est une vue en perspective du système de propulsion de la plateforme robotique de la figure 1 ;
la figure 12 est une vue de côté du système de propulsion de la figure 11 ; et
la figure 13 montre une vue en coupe transversale de la plateforme robotique selon l'invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne le domaine des engins agricoles et, en particulier le domaine des engins agricoles autonomes.

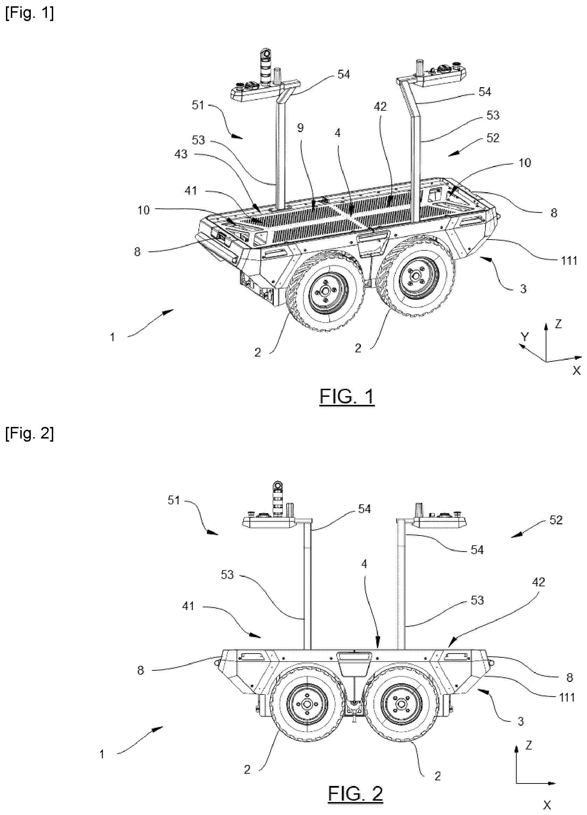

En référence à la figure 1, l'invention concerne en particulier une plateforme robotique 1. La plateforme robotique 1 est mobile et destinée à se déplacer sur le sol, entre deux rangs de végétation, notamment deux rangs de vignes.

En particulier, la plateforme robotique 1 est destinée à se déplacer entre deux rangs de vignes, notamment deux rangs de vignes étroites. Elle peut être autonome.

Il est entendu par vignes étroites des vignes dont l'axe médian des rangs est espacé typiquement d'environ 0,9 m à 1,3 m, par exemple environ 1,2 m, voire 1 m, les unes des autres.

La plateforme robotique 1 s'étend en longueur selon un axe longitudinal X, en largeur selon un axe transversale Y et en hauteur selon un axe vertical Z.

La plateforme robotique 1 comporte quatre roues de déplacement 2. En particulier, la plateforme robotique 1 comporte deux roues gauche et deux roues droite. Les roues de déplacement 2 permettent la mobilité de la plateforme robotique 1 entre les vignes.

La plateforme robotique 1 comporte en outre un châssis 3, au moins un plateau 4 et au moins deux mâts 51, 52.

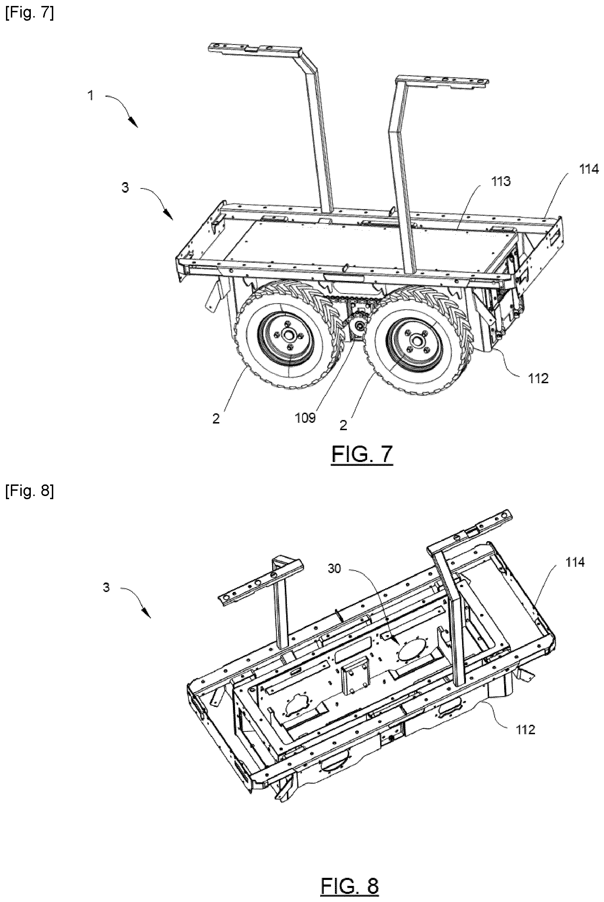

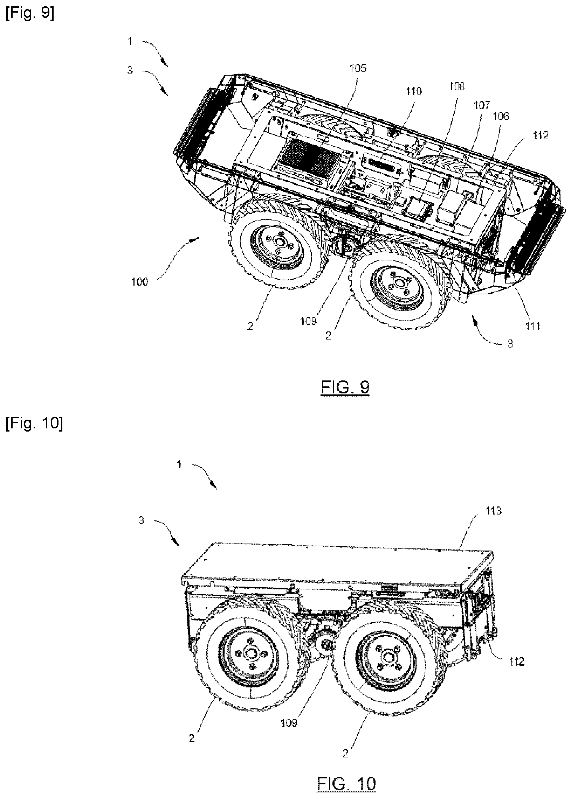

En référence aux figures 8 et 9, le châssis 3 est creux et délimite une chambre 30. Le châssis 3 est relié aux quatre roues de déplacement 2. En particulier, les deux roues gauche sont situées sur un même bord du châssis 3 et les deux roues droite sont situées sur un même autre bord du châssis 3, opposé au bord recevant les roues gauches. En référence à la figure 1, les roues gauche sont reliées à un premier bord transversal du châssis 3 et les roues droite sont reliées à l'autre bord transversal du châssis 3.

La chambre 30 du châssis 3 permet de loger un système de propulsion 100 des roues 2 de déplacement permettant la mobilité de la plateforme robotique 1 entre les vignes. Le système de propulsion comprend en particulier des moto-réducteurs de traction et des batteries d'alimentation associées, décrits en détail ci-après.

Le châssis 3 présente une largeur selon l'axe transversal Y d'environ 0,40 m. La largeur de la plateforme robotique 1, compte tenu de ce châssis et de roues agraires de chaque côté, présente ainsi typiquement une largeur 0,60 m environ, compatible avec les vignes étroites. En effet, une telle largeur permet d'assurer la circulation de la plateforme robotique 1 dans les vignes étroites.

En référence aux figures 7 à 9, selon le mode de réalisation représenté, le châssis 3 comporte un corps 112, un cadre 114 et un capotage extérieur 111. Le corps 112 est notamment représenté sur la figure 8. Il comporte une armature en acier et forme une enceinte. L'enceinte délimite la chambre 30 à l'intérieur de laquelle est logé le système de propulsion 100. Cette enceinte est ensuite fermée par un capot supérieur 113 et sur ce capot supérieur est relié le cadre 114. Le cadre 114 est configuré pour être le support des deux mâts 51, 52 et pour s'étendre sur la périphérie du corps 112. En référence à la figure 9, le capotage extérieur 111 enveloppe le corps 112 logeant le système de propulsion 100, ainsi le capotage extérieur 111 enveloppe le système de propulsion 100. Le capotage extérieur 111 permet donc de protéger le système de propulsion 100.

Pour la sécurité, la plateforme robotique peut également comprendre un « bumper », autrement dit un parechoc, pour absorber tout choc éventuel avec un obstacle. L'intégration du « bumper » à la plateforme robotique 1 est intéressante car elle permet l'accès aux batteries en maintenant les capacités de franchissement, et tout en conservant une longueur réduite de ladite plateforme robotique 1.

La figure 10 permet notamment de visualiser la compacité du châssis logeant le système de propulsion de la plateforme robotique 1 selon l'invention, intégrant la motorisation et la transmission, ainsi que des batteries d'alimentation.

En référence à la figure 1, le plateau 4 est amovible sur le châssis 3 et il est configuré pour être disposé au-dessus de la chambre 30 du châssis 3.

La chambre peut être fermée par un capot supérieur 113, par exemple en tôle, et le plateau est disposé par-dessus. Le capot supérieur 113 assure notamment une fermeture étanche de la chambre.

Le capot supérieur 113 de la chambre 30, permet de fermer l'accès au système de propulsion 100 de la plateforme robotique 1. Au contraire, laisser libre l'accès à la chambre 30 du châssis 3 permet l'accès au système de propulsion 100 et par exemple permet aisément son entretien. La présence du plateau 4 au-dessus de la chambre ne permet à fortiori pas d'y accéder, tandis qu'il est possible d'y accéder après avoir déposé le plateau 4.

En particulier, le plateau 4 présente la forme d'une plaque s'étendant longitudinalement. Le plateau 4 délimite ici deux régions de réception 41, 42, à savoir une première région de réception 41 et une deuxième région de réception 42.

Dans l'exemple représenté sur les figures, la première région de réception 41 et la deuxième région de réception 42 présentent les mêmes dimensions.

Il est évident que la première région de réception 41 et la deuxième région de réception 42 peuvent présenter des dimensions différentes.

Selon un mode de réalisation non représenté, le plateau 4 peut comporter davantage de régions de réception sur sa longueur.

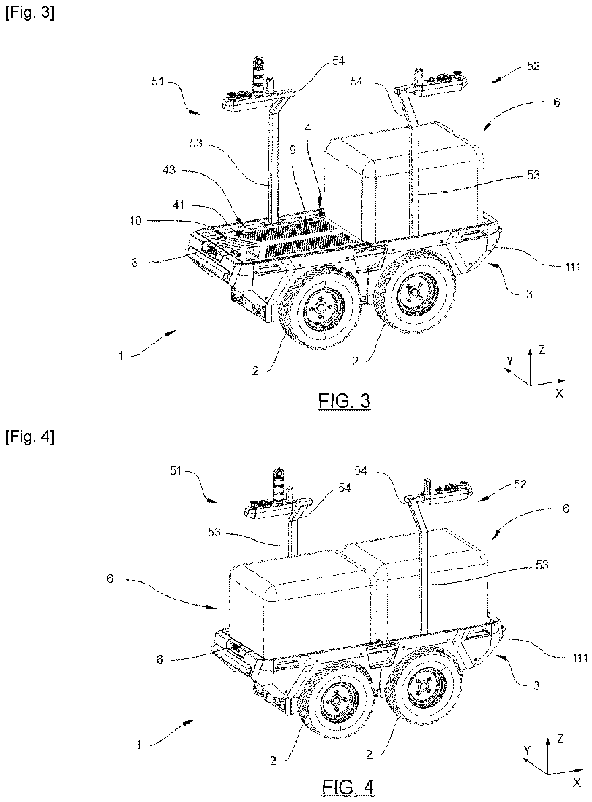

Tel que représenté sur les figures 3 et 4, le plateau 4 est configuré pour recevoir sur ces régions de réception 41, 42, un conteneur 6 et/ou un robot ou bras robotique. Le conteneur 6, le robot ou le bras robotique sont assujettis sur le plateau 4. Il va de soi que le conteneur 6, le robot ou le bras robotique dont il est question ici et dans la suite de la description s'entendent comme des exemples de chargements fonctionnels susceptibles d'être reçus sur le plateau 4. Par « chargement fonctionnel », on entend une charge utile, ayant en particulier une fonction spécifique dans le contexte de la plateforme robotique 1.

En outre, la plateforme robotique 1 selon l'invention est, en particulier, prévue pour fonctionner entre deux rangs de vignes. Toutefois, elle peut aussi bien être utilisée entre deux rangs de végétations autres que des vignes. L'utilisation de la plateforme robotique 1 selon l'invention est toutefois particulièrement avantageuse dans le cas de rangs de vignes et encore plus spécifiquement dans le cas de vignes étroites.

Ainsi, le plateau 4 mis en position au-dessus de la chambre 30, permet notamment de disposer le conteneur 6 et/ou le bras robotique, de sorte à permettre l'entretien ou la récolte des vignes.

De plus, le plateau 4 peut coopérer avec des unités de fixation 43. Les unités de fixation 43 sont situées sur chacun des bords longitudinaux du châssis 3. Les unités de fixation 43 sont configurées pour permettre d'assujettir chaque mât 51, 52 au plateau 4 et d'assujettir lesdits conteneurs 6 et/ou robots sur le plateau 4 respectivement dans la première région 41 et la deuxième région 42.

Dans le mode de réalisation représenté sur les figures, les unités de fixation 43 peuvent par exemple comporter des alésages filetés, permettant au moyen d'un système de vis d'assujettir le ou les conteneurs 6 sur le plateau 4 et le ou les robots ou bras robotique sur le plateau 4. Ainsi assujettis, le conteneur 6 et/ou le robot est relié fixement à la plateforme robotique 1 et sa chute de la plateforme 1 est empêchée, même sur des sols irréguliers, dans des pentes, etc.

De plus, des perforations traversantes 9 peuvent être formées dans la première région 41 et/ou la deuxième région 42 de réception du plateau 4.

Les perforations traversantes 9 peuvent aider à la saisie du plateau 4 pour sa mise en place. En outre, ces perforations traversantes 9 permettent également, le cas échéant, l'écoulement de jus de raisin et d'éviter son accumulation sur le plateau 4. De plus, des ouvertures 10 traversantes peuvent être formées dans la première région 41 et/ou la deuxième région 42 de réception du plateau 4.

Les ouvertures 10 permettent de saisir le plateau 4 permettant sa saisie. Ainsi, au travers de ces ouvertures 10, le plateau 4 peut être mis en place de sorte à venir au-dessus de la chambre 30 ou au contraire, le plateau 4 peut être ôté de sorte à ouvrir la chambre 30 du châssis 3.

En référence à la figure 1, les deux mâts 51, 52 sont reliés au châssis 3. En particulier, un premier mât 51 saille du châssis 3, verticalement, selon l'axe Z, dans la direction opposée des roues de déplacement 2 et un deuxième mât saille du châssis 3, verticalement, selon l'axe Z, dans la direction opposée des roues de déplacement 2. Le premier mât 51 et le deuxième mât 52 saillent chacun de l'un des bords longitudinaux du châssis 3.

En particulier, le premier mât 51 s'étend dans la première région de réception 41 ou dans la deuxième région de réception 42 du plateau 4 et le deuxième mât 52 s'étend dans l'autre des régions de réception 42, 41 du plateau 4. En d'autres termes, les premier et deuxième mâts 51, 52 saillent des deux régions de réception 41, 42 sur des bords longitudinaux et transversaux opposés du châssis 3. Le premier mât 51 et le deuxième mât 52 sont diagonalement opposés.

Les mâts 51, 52 sont assujettis au plateau 4 par ses unités de fixation 43. Les unités de fixation 43 permettent alors une configuration adaptable à l'utilisateur.

La disposition des mâts 51, 52 sur le plateau 4 permet un accès à une première vigne d'un bord transversal de la plateforme robotique 1 mais aussi un accès à une deuxième vigne d'un autre bord transversal de la plateforme robotique 1. Ainsi, la récolte et/ou l'entretien peut se faire simultanément sur les deux vignes entre lesquelles la plateforme robotique 1 circule, sans nécessiter une pluralité de passage ou d'allers-retours. Par ailleurs, les mâts 51, 52 saillants de la végétation des vignes en hauteur, permettent un accès à la plateforme 1 par un utilisateur se situant entre les rangs de vignes, directement juxtaposés des rangs de vignes entre lesquels circule la plateforme robotique 1.

En référence aux figures, chaque mât 51, 52 peut présenter au moins une unité de commande et au moins un indicateur lumineux configuré pour indiquer la localisation de la plateforme robotique 1.

L'unité de commande permet par exemple l'arrêt de la plateforme robotique 1. L'utilisateur peut par exemple appuyer sur un bouton d'arrêt d'urgence présent sur le mât 51, 52, entrainant l'arrêt complet de la plateforme 1. L'indicateur lumineux, situé en hauteur par rapport au sol sur lequel circule la plateforme robotique 1 et au-dessus de la végétation des vignes, permet à un utilisateur de localiser la plateforme robotique 1, même lorsqu'elle est en marche entre deux rangs de vignes.

De plus, chaque mât 51, 52 présente une hauteur correspondant à la hauteur moyenne d'un humain. Ainsi, un humain peut accéder au mât 51, 52 et par simple levage de son bras et pression sur l'unité de commande permettre l'arrêt d'urgence de la plateforme 1. De plus, une telle hauteur de mât 51, 52 permet de dégager de la végétation des antennes situées dans une partie supérieure du mât 51, 52, permettant notamment de capter des signaux radio, satellites.

Selon un mode de réalisation, chaque mât 51, 52 comporte deux portions, à savoir une première portion 53 et une deuxième portion 54, chaque première portion 53 saillant verticalement le long de l'axe vertical Z du châssis 3 dans la direction opposée au sol, et donc également l'opposée des roues 2 qui reposent sur le sol. Chaque deuxième portion 54 saille de la première portion 53 de manière inclinée, en direction du plateau 4. Chaque deuxième portion permet en particulier de supporter l'unité de commande pour chaque mât 51, 52.

En référence aux figures 3 et 4, la plateforme robotique 1 peut permettre le transport de deux conteneurs 6, un conteneur 6 sur chacune des régions de réception 41, 42 du plateau 4. Une telle configuration permet une collaboration entre la plateforme robotique 1 et un ou plusieurs utilisateurs. En effet, l'utilisateur ramasse les grappes des vignes et les entrepose dans les conteneurs 6, la plateforme robotique 1 s'occupe alors du stockage et du transport des grappes cueillies le long des vignes.

Selon un mode de réalisation non représenté, un bras robotique peut être assujetti sur la première portion de réception 41 du plateau 4 et un conteneur 6 peut être assujetti sur la deuxième portion de réception 42 du plateau 4. Le bras robotique peut par exemple comprendre un sécateur et/ou un préhenseur, permettant de récupérer les grappes sur les vignes, puis les entreposer dans le conteneur 6. Ainsi, une telle configuration permet un ramassage et un transport autonome des grappes de raisins sur l'ensemble de la vigne.

Selon un mode de réalisation, le bras robotique peut être équipé d'un préhenseur permettant de saisir des conteneurs 6 disposés sur le sol et de les transférer sur le plateau 4. Ainsi, avec une telle configuration, la plateforme robotique 1 permettrait le ramassage de conteneurs 6 puis leur transport.

Selon un autre mode de réalisation non représenté, un bras robotique peut être assujetti sur la première portion de réception 41 du plateau 4 et un autre bras robotique peut être assujetti sur la deuxième portion de réception 42 du plateau 4. Une telle configuration permet l'entretien de deux vignes juxtaposées de manière autonome et simultanément.

Il est évident qu'une pluralité de combinaisons de configurations sont possibles et qu'il n'en est ici listé qu'une partie. Il peut être envisagé divers bras robotiques, permettant la récolte, l'entretien et/ou le ramassage de conteneurs 6 associés à un autre bras robotique similaire ou différent, c'est-à-dire présentant d'autres fonctionnalités. Il peut aussi être envisagé de combiner l'un quelconque des bras robotiques possible avec un conteneur 6, de sorte à permettre à un utilisateur un nombre varié de taches et donc de s'adapter au mieux à son besoin.

La plateforme robotique 1 peut en outre comporter au moins deux caméras 8, situées sur le châssis 3 sur un premier bord transversal et sur un deuxième bord transversal. Les caméras 8 constituent le système de vision de la plateforme robotique 1.

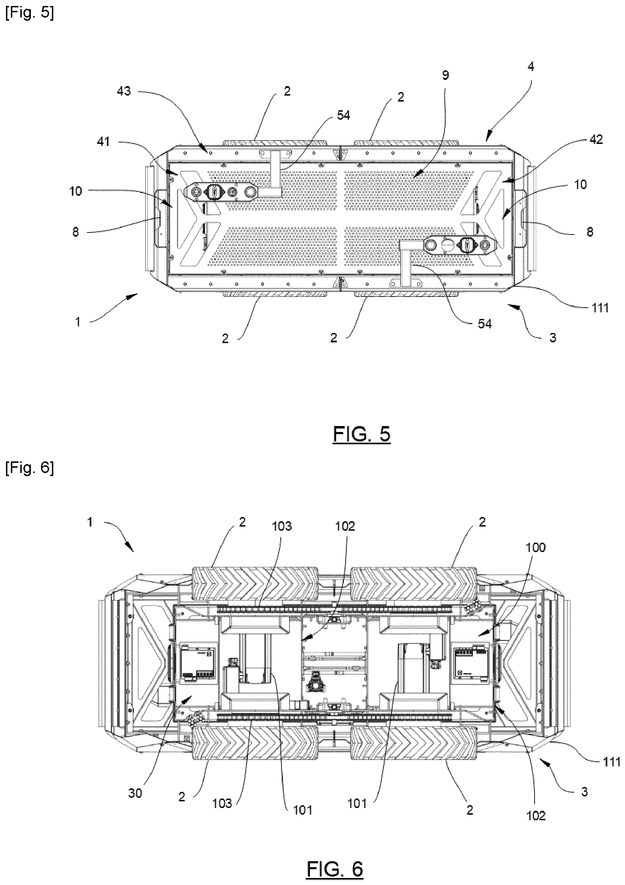

Le système de propulsion 100 de la plateforme robotique, représenté sur les figures 6, 9, 11 et 12 est configuré pour permettre l'entraînement des quatre roues 2 de déplacement.

En référence à la figure 6, le système de propulsion 100 comporte au moins deux moto-réducteurs de traction 101, au moins une batterie 102 et au moins deux systèmes de chaînes 103.

Les moto-réducteurs de traction 101 entraîne(nt) deux roues de déplacement 2, chacune placée d'un bord opposé du châssis 3. La ou les batteries 102 sont disposées dans la chambre.

Chaque système de chaîne 103 relie deux roues de déplacement 2 placées sur un même bord du châssis 3. Chaque système de chaîne 103 est configuré pour transmettre le mouvement d'une roue de déplacement 2 entraînée en mouvement par le moto-réducteur de traction 101 à la roue de déplacement 2 qui lui est reliée.

Tel que représenté sur la figure 6, le système de propulsion 100 comporte deux moto-réducteurs de traction 101, et deux batteries 102 alimentant les moto-réducteurs de traction 101.

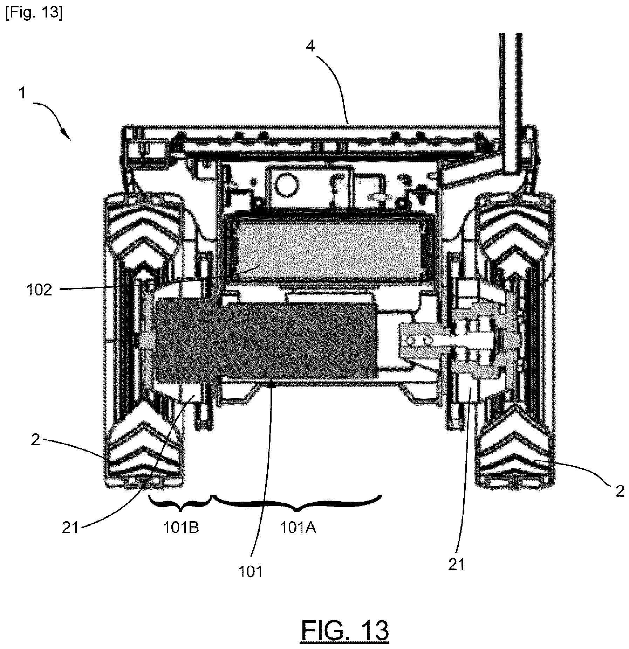

Dans un tel mode de réalisation, chacun des moto-réducteurs de traction 101 permet la mise en mouvement de deux roues de déplacement 2 disposées d'un même bord du châssis 3. La ou les batteries 102 sont disposées en regard l'une de l'autre, dans des baies dédiées, sous le plateau 4. Comme cela est visible sur la figure 13, les moto-réducteurs de traction 101 comprennent une partie moteur 101A qui est logée dans la chambre et une partie réducteur 101B qui saille depuis la chambre, à l'extérieur du châssis, pour entraîner une roue de déplacement 2.

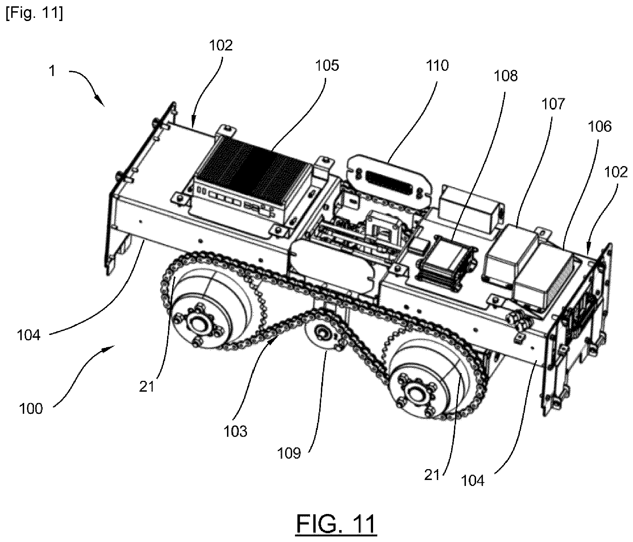

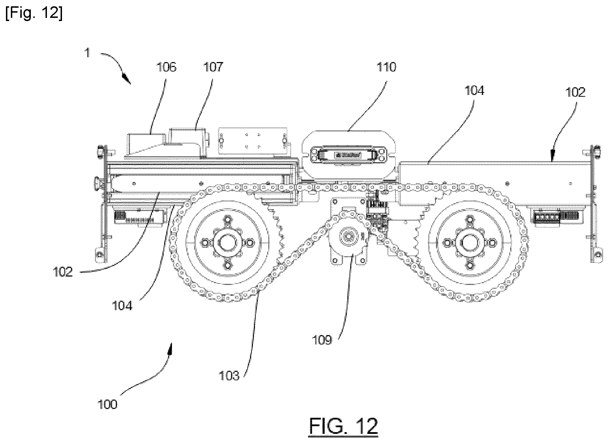

Comme cela est visible notamment sur les figures 11 et 12, les deux roues 2 de déplacement d'un même bord du châssis sont ainsi reliées entre elles par un système de chaîne 103. De chaque bord, l'une des roues 2, dite roue motrice, est ainsi mise en rotation par un moto-réducteur de traction 101.

Chaque roue 2 comprend un moyeu qui est solidaire d'une couronne qui engrène la chaîne du système de chaîne 103. Le moyeu et la couronne de l'une des roues 2 de déplacement, avant ou arrière respectivement, d'un bord gauche ou droit, sont entraînés en mouvement par un moto-réducteur de traction 101. La roue ainsi entraînée en mouvement va entraîner en rotation de façon synchrone l'autre roue 2 de déplacement située du même bord gauche ou droit que la roue 2 de déplacement, dite motrice, qui est entrainée en mouvement par le moteur 101.

Selon l'invention, le système de chaîne 103, de chaque bord, est situé à l'extérieur de la chambre.

En référence à la figure 13, le moyeu de chaque roue est notamment solidaire d'une couronne 21 en forme de bol. Cette couronne 21 en forme de bol vient « coiffer » la partie réducteur du moto-réducteur de traction 101 correspondant, à laquelle elle est fixée, permettant d'intégrer cette partie réducteur le plus à l'extérieur possible. En particulier, la localisation de la couronne 21 en forme de bol et du système de chaîne 103 à l'extérieur du châssis permet d'améliorer sensiblement la compacité de la chambre.

De chaque bord gauche ou droit de la plateforme robotique 11, celle des roues 2 de déplacement qui est entraînée en mouvement par un moto-réducteur de traction 101 est reliée audit moto-réducteur de traction 101 ; il s'agit de la roue de gauche sur la figure 13. Par exemple, un arbre moteur dudit moto-réducteur de traction 101 est rendu solidaire de la pièce 21 en forme de bol qui est elle-même solidaire du moyeu de ladite roue 2 et qui comporte la couronne engrenant la chaîne du système de chaîne 103.

Selon un mode de réalisation préféré, un moto-réducteur de traction 101 est disposé dans la chambre, à l'avant, et un moto-réducteur de traction 101 est disposé dans la chambre, à l'arrière. Les deux moto-réducteurs de traction 101 sont ainsi disposés respectivement à l'avant et à l'arrière de la chambre, en regard l'un de l'autre.

Chaque moto-réducteur de traction 101 est respectivement configuré pour permettre la mise en mouvement des roues 2 de déplacement situé d'un bord, gauche ou, respectivement, droit, du châssis.

Par exemple, le moto-réducteur de traction 101 situé à l'avant entraîne directement la roue 2 située à l'avant-gauche du châssis, celle-ci entraînant la roue 2 arrière-gauche par l'intermédiaire du système de chaîne 103. Réciproquement, dans ce cas, le moto-réducteur de traction 101 situé à l'arrière entraîne directement la roue 2 située à l'arrière-droit du châssis, celle-ci entraînant la roue 2 avant-droite par l'intermédiaire du système de chaîne 103.

En référence aux figures 11 et 12, la plateforme robotique 1 comporte deux systèmes de galet tendeur 109, à savoir un premier et un deuxième systèmes de galet tendeur 109, assurant la fonction de tendeurs de chaîne. Le premier système de pignon 109 est interposé entre les deux roues 2 gauche de déplacement et le deuxième système de pignon 109 est interposé entre les deux roues 2 droite de déplacement. Les premier et deuxième systèmes de galet tendeur 109 sont respectivement reliés au système de chaîne 103 associés aux roues 2 entre lesquelles ils sont interposés. Les systèmes de galet tendeur 109 sont configurés pour tendre les systèmes de chaîne 103. Les systèmes de galet tendeur 109, de chaque bord, se composent d'un pignon coopérant avec une glissière, une vis et un écrou configurés pour bloquer la position de la glissière dans une position de réglage de la tension de la chaîne.

Chaque moto-réducteur de traction 101 est contrôlé au moyen d'un contrôleur moteur, dit « bas niveau ». Les contrôleurs bas niveau reçoivent leurs consignes via un réseau CAN. Ils contrôlent et alimentent électriquement les moto-réducteurs de traction 101. Notamment, un contrôleur moteur avant contrôle le moto-réducteur de traction 101 situé à l'avant et un contrôleur moteur arrière contrôle le moto-réducteur de traction 101 situé à l'arrière. Alternativement, le contrôleur moteur avant contrôle le moto-réducteur de traction 101 situé à l'arrière et le contrôleur moteur arrière contrôle le moto-réducteur de traction 101 situé à l'avant.

Chaque moto-réducteur de traction 101, chaque contrôleur moteur, de même que tout autre dispositif consommateur d'énergie électrique de la plateforme robotique 1, est notamment alimenté en énergie électrique fournie par la ou les batteries 102. La puissance électrique délivrée par la ou les batteries 102 est distribuée à l'ensemble des consommateurs d'énergie électrique de la plateforme robotique 1 via un module distributeur de puissance électrique. Notamment, le module distributeur de puissance électrique comporte une barre de distribution et de connexion électrique par laquelle est distribuée la puissance électrique délivrée par la ou les batteries 102.

En tant que consommateurs d'énergie électrique, la plateforme robotique 1 peut notamment comporter un convertisseur DC/DC configuré pour convertir la tension électrique délivrée par la ou les batteries 102 afin de l'adapter aux besoins d'équipements électronique embarqués notamment. Par exemple, la ou les batteries électriques 102 délivrent une tension de 48 V et le convertisseur DC/DC convertit l'énergie électrique pour la ramener à une tension de 24 V adaptée pour certains équipements et accessoires d'électronique embarquée, comme un récepteur de télécommande de la plateforme robotique 1, un récepteur GPS, des capteurs etc.

La puissance électrique délivrée par la ou les batteries 102 peut également alimenter, toujours via le module distributeur de puissance électrique, d'autres consommateurs d'énergie électrique non cités. En outre, des batteries additionnelles disposées à l'intérieur ou à l'extérieur du châssis, notamment au-dessus du plateau 4, peuvent également être connectées au module distributeur de puissance, soit pour fournir de l'énergie électrique additionnelle à destination des consommateurs d'énergie électrique de la plateforme robotique 1, soit pour s'alimenter ou se recharger grâce à l'énergie électrique fournie par la ou les batteries 102 situées dans la chambre, sous le plateau 4.

La ou les batteries 102 sont notamment amovibles, pour être rechargées en dehors de la plateforme robotique 1, et rackables dans des baies dédiées prévues dans le châssis. Notamment, il peut être prévu que lesdites baies soient extérieures à la chambre, bien que situées sous le plateau 4 et à l'intérieur du volume défini par le châssis. Les baies dédiées aux batteries 102 comprennent des connecteurs électriques dans lesquelles les batteries 102 sont destinées à s'enficher. L'indépendance des baies dédiées aux batteries 102 vis-à-vis de la chambre permet notamment de gérer de façon séparée les problématiques d'étanchéité. La chambre peut ainsi être capotée de façon rigoureusement étanche, l'étanchéité de la chambre n'étant pas affectée par le caractère amovible des batteries 102. Les batteries 102 sont notamment de forme longiforme adaptées à être empilées, et les baies dédiées sont bien entendu de forme correspondante.

Une telle configuration du système de propulsion 100 permet l'entraînement des quatre roues 2 de déplacement de la plateforme robotique 1 en limitant son encombrement et en abaissant son centre de gravité, permettant ainsi une bonne stabilité de la plateforme robotique 1, notamment en pente et en dévers.

Selon un mode de réalisation, le plateau 4 de la plateforme robotique 1 est ainsi situé à environ 40 cm du sol, notamment à 407 mm du sol, tout compris. Autrement dit, le plateau 4 est juste au-dessus du sommet des roues de déplacement 2, qui sont de type agraire. Par « roue agraire », on entend des roues standards dans le domaine agricole et viticole. Il s'agit typiquement de roues agraires ayant un diamètre d'environ 40 cm, configurées pour être gonflées à basse pression, soit par exemple à 0,8 bar, et pour supporter des charges de l'ordre de 160 kg par pneu à 15km/h. De telles roues agraires sont particulièrement adaptées à un usage agricole, notamment dans des parcelles viticoles, car elles minimisent la compaction du sol et fournissent de bonne performance de traction et de franchissement. Du fait de sa longueur réduite et la garde au sol d'environ 14 cm, la plateforme robotique 1 est apte à franchir des obstacles classiques en milieu agricole, notamment viticole, tel que des bosses de 10 cm de hauteur, à une vitesse de 7 km/h. En outre, les dimensions de la plateforme robotique 1 et en particulier du châssis sont adaptées pour franchir des changements de pentes, autrement dit des chevets, courants en parcelle viticole, des ornières, etc.

Notamment, en référence à la figure 2, une section de la plateforme robotique 1 hors mâts, vue de côté, s'inscrit sensiblement dans un trapèze dont le grand côté, en haut, représente la longueur du plateau 4, soit environ 1,34 m selon le mode de réalisation déjà évoqué, avec une longueur de châssis, correspondant sensiblement à la longueur de la chambre, d'environ 1,02 m. Cette longueur du plateau 4 permet notamment d'y juxtaposer deux caisses viticoles. Le petit côté du trapèze correspond peu ou prou à l'empreinte de la plate-forme robotique, soit la distance entre l'avant de la roue avant et l'arrière de la roue arrière. L'angle formé à l'avant et à l'arrière en rejoignant le grand côté et le petit côté ainsi défini est adapté au franchissement d'obstacles déjà évoqués, ainsi qu'aux changements de pentes courants en parcelles viticoles.

Avec la présence des deux moteurs 101 et des deux batteries 102 associées, les roues 2 d'un premier bord longitudinal, pouvant être qualifiées de roues avant de la plateforme robotique 1, peuvent être motrices et permettre l'entrainement des deux autres roues 2, pouvant être qualifiées de roues arrière de la plateforme robotique 1.

Au contraire, les roues 2 du second bord longitudinal de la plateforme 1, les roues arrière, peuvent également être motrices et permettre l'entrainement des deux autres roues 2, les roues avant. Ainsi, la plateforme robotique 1 peut circuler entre les vignes, dans une direction ou dans une autre, de manière sélective. En d'autres termes, la plateforme robotique 1 peut avancer, ou au contraire reculer entre les deux rangs de vignes, en fonction du besoin de l'utilisateur.

En référence à la figure 9, la ou les batteries 102 sont logées dans une baie 104 respective.

La plateforme robotique 1 comprend également un contrôleur haut niveau 105, par exemple de type PC embarqué, logé dans la chambre et configuré pour exécuter un logiciel de navigation de la plateforme robotique et pour commander aux contrôleurs moteurs des moto-réducteurs de traction 101.

Selon la configuration choisie, la chambre peut également intégrer un module d'entrées-sorties relié à un réseau CAN de la plateforme robotique 1.

Un boîtier GPS 106, un récepteur de télécommande 107 (pour la commande à distance de la plateforme robotique 1) et un routeur Ethernet 108 peuvent également être intégrés à la chambre et alimentés en énergie électrique à partir de la ou des batteries 102, notamment le cas échéant via un convertisseur DC/DC tel que décrit précédemment. De façon similaire, la chambre peut également loger un hub USB ou encore un capteur inertiel permettant de mesurer le roulis, le tangage ou encore le lacet de la plateforme robotique 1.

Le boîtier GPS 106 permet une localisation de la plateforme robotique 1 et donc son guidage dans les vignes. Le routeur Ethernet 108 permet par exemple de créer un réseau Ethernet au sein de la plateforme robotique 1.

Tous les équipements susmentionnés, optionnels ou non, de même que le module distributeur de puissance électrique, les contrôleurs moteurs qui contrôlent les moto-réducteurs de traction, etc. sont commandés, si nécessaire, à partir du contrôleur haut niveau 105.

Selon un mode de réalisation, la plateforme robotique 1 comprend par ailleurs une interface électrique comprenant des connecteurs électriques prévus pour alimenter des équipements disposés sur la plateforme, tels qu'un robot ou un bras robotique. Par exemple, ces connecteurs électriques affleurent au niveau de la face supérieure de la chambre et permettent de connecter électriquement de tels équipements électriques au travers du capot. L'alimentation électrique est alors fournie par la ou les batteries 102 disposées sous le plateau 4. De tels connecteurs électriques permettent également, le cas échéant, le branchement de batteries additionnelles extérieures au châssis.

La plateforme robotique 1 peut en outre comporter au moins un porte-fusible 110, le porte fusible 110 étant relié au châssis 3 sur l'un de ses bords longitudinaux.

Ainsi, la plateforme robotique 1 de l'invention avec son centre de gravité bas est adaptée à des sols irréguliers et aux dévers et permet à la fois le ramassage de grappes entières de raisins et le stockage desdites grappes de raisins, de sorte à faciliter, automatiser et réduire le temps et la contrainte du ramassage des grappes de raisins en vignes étroites.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Plateforme robotique (1) mobile destinée à se déplacer sur le sol entre deux rangs de végétations, notamment de vignes, et s'étendant en longueur selon un axe longitudinal (X), en largeur selon un axe transversal (Y) et en hauteur selon un axe vertical (Z), ladite plateforme (1) comportant :
- quatre roues de déplacement (2), à savoir deux roues gauche et deux roues droite ;
- un châssis (3) creux délimitant une chambre (30), relié aux roues de déplacement (2), les roues gauche étant placées sur un même bord du châssis (3) et les roues droite étant placées sur un même bord du châssis (3) opposé au bord recevant les roues gauche ;
- au moins un plateau (4), disposé au-dessus de la chambre (30) du châssis (3),
- au moins un système de propulsion (100) configuré pour permettre l'entraînement des quatre roues (2) de déplacement, ledit système de propulsion (100) étant disposé dans la chambre (30) du châssis (3) ;
ledit système de propulsion (100) comportant :
- au moins deux moto-réducteurs de traction (101), chacun relié à une paire de roues (2) de déplacement, chaque paire de roues (2) de déplacement étant placée sur un bord opposé du châssis (3) en regard l'une de l'autre, chaque moto-réducteur de traction (101) comprenant une partie moteur (101A) logée intégralement dans la chambre et une partie réducteur (101B) saillant, depuis la chambre, au moins en partie à l'extérieur du châssis pour être couplée à une roue (2) de déplacement ;
- au moins une batterie (102) disposée dans le châssis, sous le plateau (4) ;
au moins deux systèmes de chaîne (103), chaque système de chaîne (103) reliant deux roues de déplacement (2) placées sur un même bord du châssis (3), chaque système de chaîne (103) étant configuré pour synchroniser la rotation des roues de déplacement (2) d'un même bord.

2. Plateforme robotique (1) selon la revendication 1, dans laquelle ledit système de propulsion (100) comporte deux moto-réducteurs de traction (101), et une ou deux batteries (102) configurées pour alimenter les moto-réducteurs de traction (101), chacun des moto-réducteurs de traction (101) permettant la mise en mouvement de deux roues de déplacement (2) d'un même bord du châssis.

3. Plateforme robotique (1) selon l'une des revendications 1 à 2, dans laquelle les systèmes de chaîne (103) sont disposés à l'extérieur du châssis par rapport à chaque bord.

4. Plateforme robotique (1) selon l'une des revendications 1 à 3, dans laquelle un moto-réducteur de traction (101) est disposé à l'avant de la chambre et entraîne en rotation une roue avant d'un premier bord, gauche ou droit, la dite roue avant du premier bord étant solidaire d'une couronne elle-même solidaire de son moyeu, et étant reliée à la roue arrière du même premier bord par l'intermédiaire de l'un des systèmes de chaîne (103), ladite roue arrière du premier bord étant elle-même solidaire de sa propre couronne solidaire de son moyeu, de sorte à entraîner en rotation ladite roue arrière du premier bord ; et un deuxième moto-réducteur de traction (101) est disposé à l'arrière de la chambre et entraîne en rotation une roue arrière d'un second bord, opposé au premier bord, la dite roue arrière du second bord étant solidaire d'une couronne elle-même solidaire de son moyeu, et étant reliée à la roue avant du même second bord par l'intermédiaire de l'autre des systèmes de chaîne (103), ladite roue avant du second bord étant elle-même solidaire de sa propre couronne solidaire de son moyeu, de sorte à entraîner en rotation ladite roue avant du second bord.

5. Plateforme robotique (1) selon l'une des revendications 1 à 4, dans laquelle l'au moins une batterie (102) est logée dans une baie (104) respective, ladite au moins une batterie (102) étant rackable dans la baie (104) et amovible.

6. Plateforme robotique (1) selon l'une des revendications 1 à 5, comportant deux systèmes de galet tendeur (109), à savoir un premier pignon et un deuxième pignon, le premier pignon étant interposé entre les deux roues (2) gauche de déplacement et le deuxième pignon étant interposé entre les deux roues (2) droite de déplacement, les systèmes de galet tendeur (109) étant respectivement relié à un système de chaîne (103), lesdits systèmes de galet tendeur étant configurés pour tendre lesdits systèmes de chaîne (103).

7. Plateforme robotique (1) selon l'une des revendications 1 à 6, dans laquelle le châssis (3) loge également un boîtier GPS, un contrôleur moteur pour chaque moteur (101), un contrôleur principal, un routeur Ethernet, un capteur inertiel.

8. Plateforme robotique (1) selon l'une des revendications 1 à 7, dans laquelle la chambre (30) présente une largeur selon l'axe transversal (Y) maximale de 0,40 m, la largeur de la chambre étant notamment égale à environ 0,37 m, une longueur selon l'axe longitudinal (X) maximale d'environ 1,10 m, la longueur de la chambre étant égale à environ 1,02 m, et une hauteur suivant l'axe vertical (Z) maximale d'environ 0,35 m, la hauteur de la chambre étant notamment égale à environ 0,32 m.

9. Plateforme robotique (1) selon la revendication 8, présentant une garde au sol d'environ 0,14 m.

10. Plateforme robotique (1) selon l'une des revendications 1 à 9 dans laquelle le plateau (4) est amovible sur ledit châssis (3).
